# EUROPEAN PATENT APPLICATION

(11) **EP 0 977 130 A1**
(43) Date of publication of application: **02.02.2000**
(21) Application number: 99113173.1
(22) Date of filing: 07.07.1999
(51) Int. Cl.: G06F 17/30

(54) **Facility for selecting and printing web pages**

(30) Priority: 29.07.1998 US 124531
(71) Applicant: SEIKO EPSON CORPORATION, Tokyo 163 (JP)
(72) Inventor: Nelson, Steve, San Jose, California 95139 (US); Li, Chia-Hsin, San Jose, California 95129 (US); Huffmire, Theodore Douglas, San Francisco, California 94114 (US)
(74) Representative: Grünecker, Kinkeldey, Stockmair & Schwanhäusser Anwaltssozietät

(57) **Abstract**

A program of instructions executing on a network client computer provides a facility for printing network-accessed documents such as Web pages. The facility allows a user to tag documents obtained from a network for subsequent printing. A reference for each tagged document is assembled into a set of tag references. A representation for each tag reference, such as a thumbnail replica of the referenced document, may be displayed and the set may be edited to remove or reorder selected tag references. A single user request causes the facility to print a rendition of the documents that are referred to by tag references in the set. The rendition may be generated according to one or more user preferences. The facility can also provide features that allow a user to easily tag all Web pages accessible from the home page of a Web server and to print a collection of Web pages or documents that constitute an on-line book. The latest version of each document that is available from the network is used to print the on-line book.

## Description

### TECHNICAL FIELD

The present invention relates generally to accessing information from computer networks. The present invention relates more particularly to improved facilities for printing formatted documents that are obtained from such networks.

### BACKGROUND ART

Networks like the Internet have been in existence for years; however, they were not popular media of information exchange until devices and methods were developed to simplify the actions a user must take to access and peruse information stored across one or more networks. The introduction of methods and devices related to the so called World Wide Web ("Web") is a very good example of this type of development. The Web is a collection of servers and connecting networks that utilize the Hypertext Transfer Protocol (HTTP) to access documents or "Web pages" that use a "markup language" to represent a wide variety of objects including text, images, sounds and programmed functions. A widely used markup language is the Hypertext Markup Language (HTML).

The HTML provides facilities for specifying formatted document content and for specifying "links" to other documents. These links allow a user to easily navigate among documents. By assigning a unique identifier, known as a Uniform Resource Locator (URL), to each document that is available throughout a network, a user can navigate among these documents without regard to where they are actually located.

A user may interact with network servers using a computer that is configured to operate as a network client. This is often accomplished by using software known as a "Web browser" that allows a user to access a particular document by requesting servers on the network to "get" the document specified by its URL. After the document has been returned to the client computer, the Web browser can present the document's contents to the user. After the document has been received and presented, the user may take other actions such as printing the document and/or requesting another document.

Unfortunately, current Web browsers provide only very simple facilities for printing documents such as Web pages. These facilities require a user to retrieve the document of interest and then press a key or use a pointing device like a mouse to "click" on an icon to print the document while it is displayed. If a document is not currently displayed, it cannot be printed. For example, there is no convenient way to print all Web pages for a designated Web server and it is not possible to automatically print current versions of a specified list of Web pages. In addition, each document is printed without regard to document contents. For example, the printed image cannot be split into pieces that fit conveniently on individual sheets of paper.

### DISCLOSURE OF INVENTION

It is an object of the present invention to provide improved facilities for printing network-accessed documents such as Web pages.

According to one aspect of the present invention, a method for processing documents such as Web pages comprises obtaining one or more documents from a network, receiving requests from a user to tag the one or more documents to create a set of "tag references" to the tagged documents and, in response to a user request, generating information representing an image or rendition of each documents that has a tag reference in the set.

According to another aspect of the present invention, a method for processing documents such as Web pages comprises obtaining a set of references, each reference in the set identifying a document, recording in local storage one or more documents obtained from a network that are represented by references in the set but either are not yet recorded in local storage or are recorded in local storage in a form that is superceded by a document obtained from the network, and generating image information representing an image or rendition of each document that is recorded in local storage and represented by a reference in the set.

The present invention is not limited to any particular type of document. For example, the following disclosure makes more particular mention of Web pages that have content expressed in the Hypertext Markup Language (HTML), but HTML is mentioned merely as one example of a Standard Generalized Markup Language (SGML) that conforms to international standard ISO 8879:1986. Furthermore, the present invention may be used with other types of documents besides markup-language documents.

The various features of the present invention and its preferred embodiments may be better understood by referring to the following discussion and the accompanying drawings in which like reference numerals refer to like elements in the several figures. The contents of the following discussion and the drawings are set forth as examples only and should not be understood to represent limitations upon the scope of the present invention.

### BRIEF DESCRIPTION OF DRAWINGS

Fig. 1 is a schematic representation of a network interconnecting a network client and two network servers.
Fig. 2 is a functional block diagram of a typical computer that may be used as a network client or network server to implement various aspects of the present invention.
Fig. 3 is a high-level flow diagram of one process that may be used to carry out various aspects of the present invention.
Figs. 4 through 7 are more detailed flow diagrams illustrating ways in which some of the steps in the process of Fig. 3 may be carried out.
Fig. 8 is a flow diagram illustrating one way in which a "tag-all" command may be carried out.
Fig. 9 is a schematic diagram of documents that reference one another.
Fig. 10 is a flow diagram illustrating one way in which an "online book" may be printed.

### MODES FOR CARRYING OUT THE INVENTION

### Overview

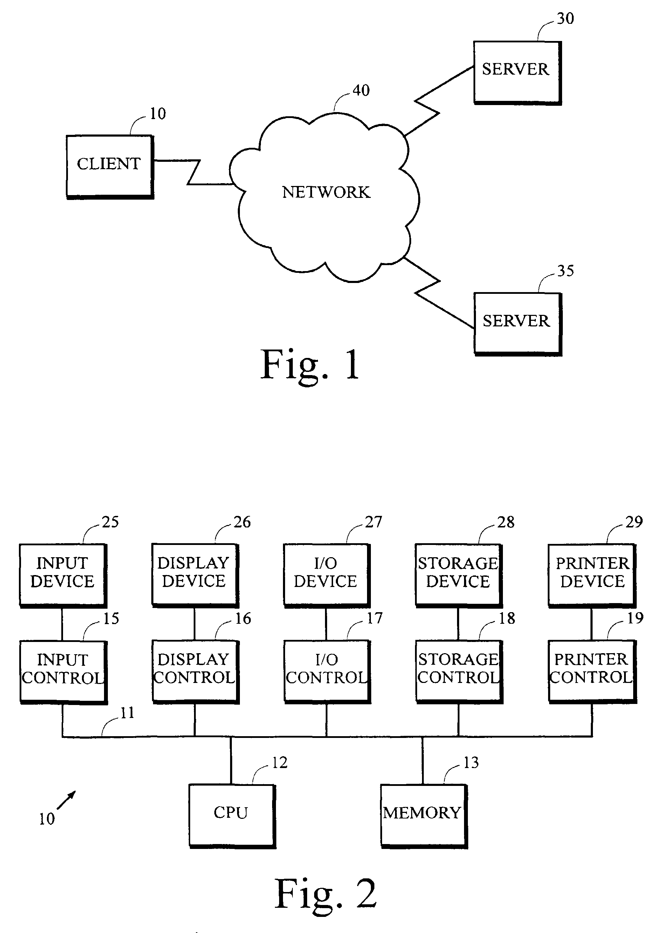

Fig. 1 is a schematic representation of a network in which network client 10 uses network 40 to access resources provided by network servers 30 and 35. Although it is contemplated that network server 30 and network server 35 are hypermedia servers, perhaps operating in conformity with the Hypertext Transfer Protocol (HTTP), this is not necessary to practice the present invention. The nature of the communication paths connecting network client 10, network server 30 and network server 35 to network 40 are not critical to the practice of the present invention. Such paths may be implemented as switched and/or non-switched paths using private and/or public facilities. Similarly, the topology of network 40 is not critical and may be implemented in a variety of ways including hierarchical and peer-to-peer networks. Network client 10 and network server 30, for example, may be locally located with respect to one another and may be implemented on the same hardware.

Fig. 2 is a functional block diagram of a typical computer system that may be used to implement network client 10, network server 30 or network server 35. As shown, this computer system includes bus 11 that interconnects central processing unit (CPU) 12, system memory 13 and several device interfaces. Bus 11 can be implemented by more than one physical bus such as a system bus and a processor local bus. CPU 12 represents processing circuitry such as a microprocessor. System memory 13 represents various memory components such as random access memory (RAM) and read only memory (ROM). Input control 15 represents interface circuitry that connects to one or more input devices 25 such as a keyboard, mouse, trackball or stylus. Display control 16 represents interface circuitry that connects to one or more display devices 26 such as a video display terminal. I/O control 17 represents interface circuitry that connects to one or more I/O devices 27 such as a modem or a network connection. Storage control 18 represents interface circuitry that connects to one or more storage devices 28 such as a magnetic disk drive, magnetic tape drive, optical disk drive or solid-state storage device. Printer control 19 represents interface circuitry that connects to one or more printer devices 29 such as a laser printer, ink-jet printer or plotter. No particular type of computer system is critical to practice the present invention. For example, a computer with a bus architecture such as that illustrated in Fig. 2 is not essential.

In a typical embodiment, computer system 10 carries out various aspects of the present invention by using CPU 12 to execute a program of instructions that is fetched from storage device 28 or obtained from a network server or other source through I/O device 27. Requests for specific documents are received from a user through input device 25 and the document is obtained from a server on network 40 through I/O device 27. After it has been retrieved from network 40, the document is written into memory 13 and a rendition of the document is presented to the user through display device 26. In addition, the document may be written into a cache or local storage provided by storage device 28. In response to requests received from the user through input device 25, computer system 10 identifies selected documents and produces a rendition of the selected documents through printer device 29.

Various aspects of the present invention may be embodied in one or more programs of instructions executable by a machine and conveyed by a medium that is readable by a machine, including various magnetic media such as disk or tape, various optical media such as compact discs, and optical, infrared and radio-frequency communication channels.

### High-Level Flow Diagram

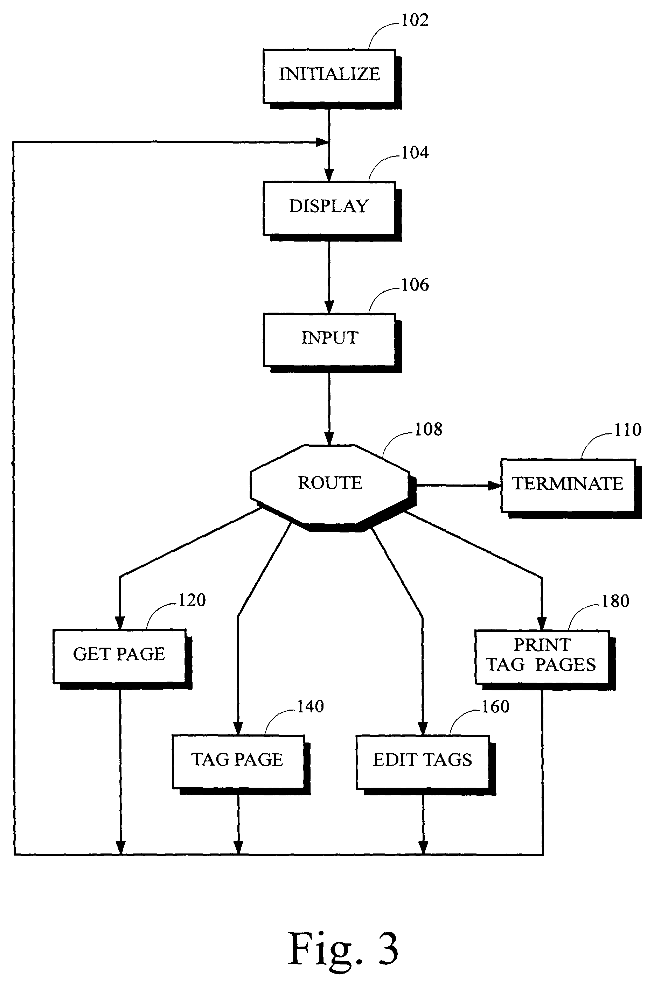

Fig. 3 shows a high-level flow diagram of one process that may be used to carry out various aspects of the present invention. Initialize 102 represents steps taken to begin the process. This includes activities such as allocating memory, opening files, obtaining user configuration parameters and providing initial values for program variables. Display 104 represents steps taken to generate a visual or aural display to a user. This display includes a presentation of a user-to-program interface, informative messages or a rendition of a document. Input 106 receives requests from a user that are provided through an input device like a keyboard, mouse or other pointing device.

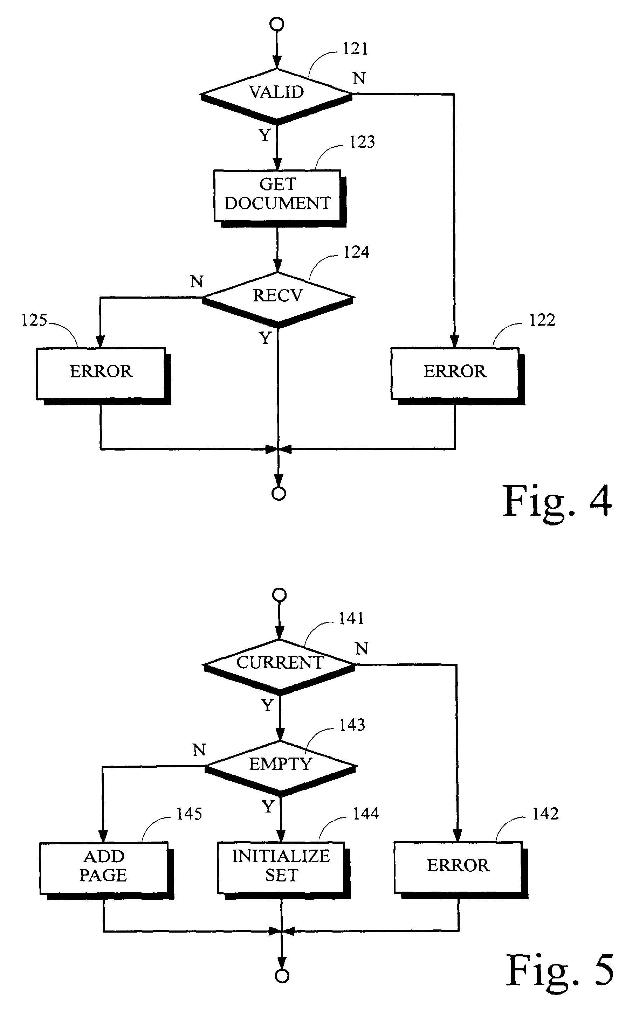

In response to each user request, route 108 invokes one or more processes that are selected according to the nature of the request. For example, in response to a request for a specific document, route 108 invokes a process represented by get-page 120 to obtain the document and present it to the user. In response to a request to select or "tag" a document for subsequent printing, route 108 invokes a process represented by tag-page 140. Route 108 invokes a process represented by edit-tags 160 in response to a request to show and/or modify a set of "tags" or references to selected documents. A process represented by print-tag pages 180 is invoked in response to a request to print all tagged documents. Terminate 110 is invoked in response to a user request to quit. This includes activities such as closing files and deallocating memory. Figs. 4 through 7 provide more detailed flow diagrams illustrating ways in which some of the processes mentioned above may be carried out.

These processes may be performed by programs of instructions that are already stored in storage device 28 or are obtained as needed from network 40. The programs may be provided in a wide variety of forms such as a so called "applet", a so called "plug-in" to another application program, or an integral part of an application program like a Web browser. For example, the present invention may be embodied in programs of instructions that are installed in network client 10 and well integrated with a Web browser. As another example, the present invention may be embodiment in applets that are obtained from a network server as needed. No particular implementation is essential to practice the present invention.

### Major Features

### Get Page

Fig. 4 illustrates one way in which get-page 120 may be carried out. In step 121, the process determines whether the user has submitted a valid request. For example, this may include validating the syntax of a document reference. If the user request is not valid, an indication of the error is generated in step 122 and the process continues with display 104 presenting the error indication. If the user request is deemed to be valid, step 123 causes computer system 10 to send a "get" request to network 40 requesting that the specified document be returned to computer system 10. Step 124 subsequently determines whether the document was received. For example, this may include the detection of a reply from the network indicating the "get" request cannot be satisfied, or the expiration of some time period in which no reply is received. If the document is not received, an indication of the error is generated in step 125 and the process continues with display 104 presenting the error indication. If the document is received, the process continues with display 104 presenting a rendition of the document.

### Tag Page

Fig. 5 illustrates one way in which tag-page 140 may be carried out. In step 141, the process determines whether there is a "current" document. For example, this may include determining whether a document is currently being displayed to the user. If there is no current document, an indication of the error is generated in step 142 and the process continues with display 104 presenting the error indication. If there is a current document, step 143 determines whether the set of tagged documents is empty. If the set is not empty, a "tag reference" to the current document is added to the set in step 145. If the set is empty or, alternatively, program variables have not yet been initialized to represent the set, step 144 initializes these variables and/or working storage to represent a set with a tag reference to the current document. The process continues with display 104.

### Edit Tags

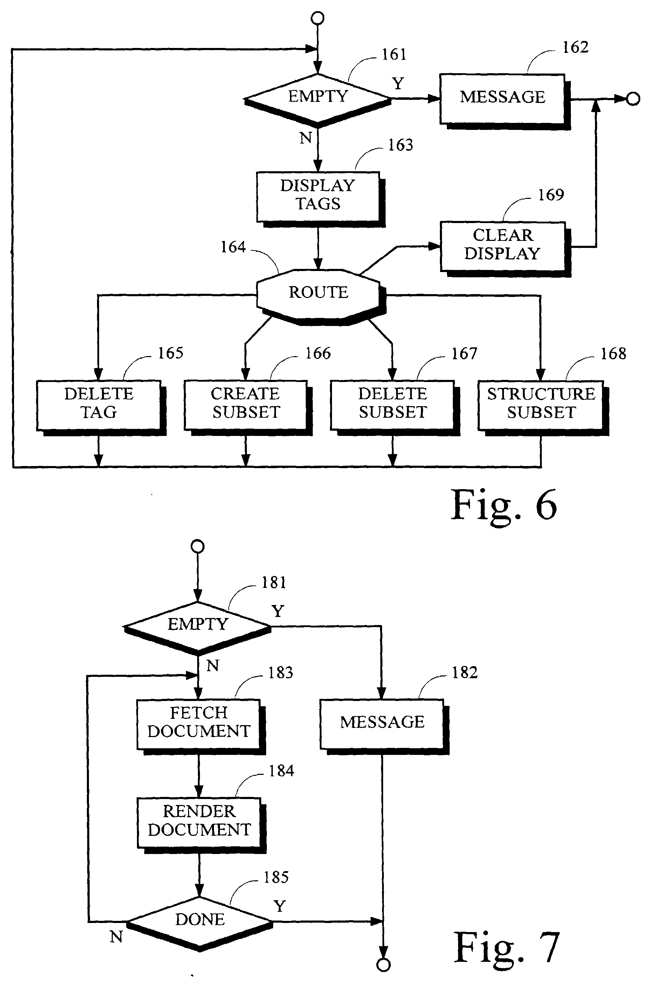

Fig. 6 illustrates one way in which edit-tags 160 may be carried out. In step 161, the process determines whether the set of tagged documents is empty. If the set is empty or, alternatively, program variables have not yet been initialized to represent the set, an indication of this condition is generated in step 162 and the process continues with display 104 presenting the error indication. If the set is not empty, a representation of each document having a tag reference in the set is displayed. The representation may be the URL of an HTTP document, a thumbnail replica of document contents, a description provided by the user, or essentially any other type of representation that may be desired. Step 164 receives user input and invokes appropriate processes in response to each request. In response to a delete request, step 165 modifies program variables to effectively remove the corresponding tag reference from the set. Step 161 subsequently determines whether the set is now empty, as described above.

In response to a create-subset request, step 166 modifies one or more variables to create a subset that may contain one or more tags. Subsets may be created to organize the set of tagged documents into essentially any desired organization such as a collection of chapters or folders. Preferably, the step 166 also allows a user to specify a name for the subset.

In response to a delete-subset request, step 167 modified one or more variables to effectively remove a specified subset. In preferred embodiments, the user is warned if the subset is not empty. If desired, the delete-subset process may be designed to also delete tags from the set.

In response to a structure-subset request, step 168 modifies one or more variables to effectively define which tags belong to which subsets. In one embodiment, a subset may include any number of tags from zero to all tags in the set, and it may include other subsets. Furthermore, a tag may be contained in more than one subset.

In response to a user request to end the edit-tags process, step 169 clears the display of tag representations and the process continues with display 104.

### Print Tagged Pages

Fig. 7 illustrates one way in which print-tag pages 180 may be carried out. In step 181, the process determines whether the set of tagged documents is empty. If the set is empty or, alternatively, program variables have not yet been initialized to represent the set, an indication of this condition is generated in step 182 and the process continues with display 104 presenting the error indication. If the set is not empty, step 183, if necessary, fetches into memory 13 the document that corresponds to the first tag reference in the set. In a preferred embodiment, a fetch is not performed if the document is already stored in memory 13. In yet another embodiment, a document is automatically obtained from network 40 if it is not available from local storage such as storage device 28.

Step 184 analyzes the contents of the document and generates "image information" that represents an image or rendition of the document. The form of the image information is dictated by system requirements. In some systems the image information is device dependent, which means the form and content of the image information depends on the choice of printer device 29. In other systems, the image information is device independent but must conform to standards or specifications imposed by the operating system. Step 184 also causes computer system 10 to send the image information to printer device 29 so that the rendition can be printed. Step 185 reiterates steps 183 and 184 until all of the documents represented by tag references in the set have been processed. The process then continues with display 104.

An embodiment of the print process may be also carried out for one or more subsets of tagged documents. Such an embodiment operates in the same manner as that just described except that references to "set" should be understood to refer to the appropriate subsets.

In preferred embodiments, the user is allowed to specify one or more preferences that control various aspects of how the image information is generated. For example, an embodiment could allow a user to indicate that certain formatting features such as colors, underlining, italicization, use of bold-faced fonts, and various types of graphical objects should be rendered or not rendered. As another example, an embodiment could allow a user to indicate whether documents should be rendered with "page breaks" inserted at positions controlled by the user or controlled by programs that analyze document content. Storage device 28 could be used to store the user preferences.

### Additional Features

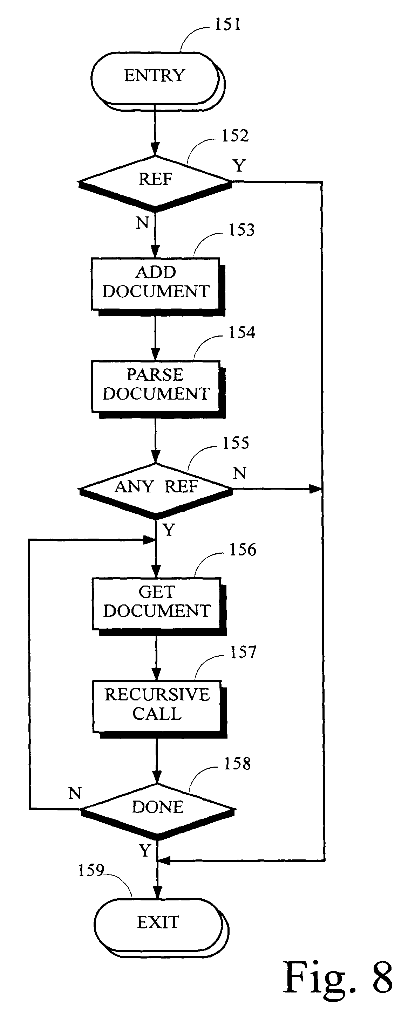

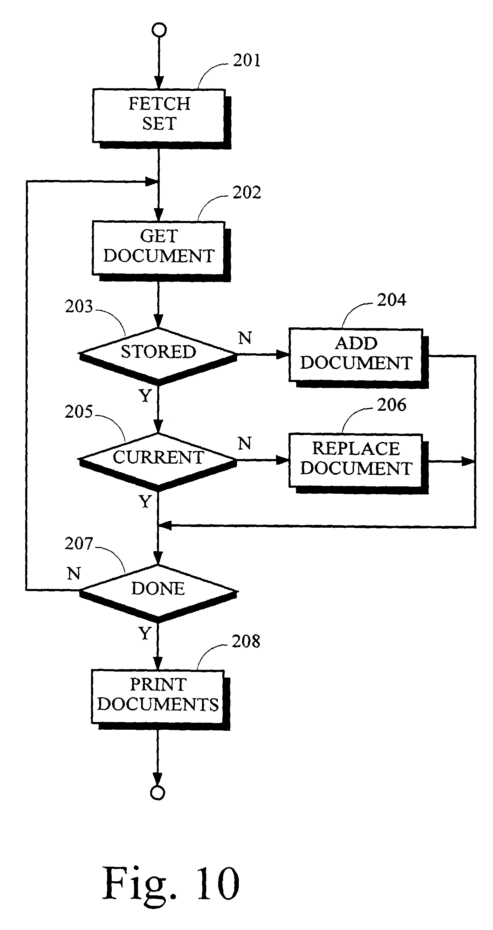

Processes for two additional features are illustrated in Figs. 8 and 10. Fig. 8 illustrates one way to carry out a "tag-all" request. Fig. 10 illustrates one way in which an "online book" may be printed. These features are described below.

### Tag-All Request

A "tag-all" request invokes a process to tag a designated document and to tag all other documents that are referenced directly and indirectly by that designated document. This process is somewhat similar to forming a set that includes a designated person in a hierarchical organization and all other persons in the organization that are subordinate to the designated person. It is anticipated that all Web pages for a particular Web site could be easily tagged by merely obtaining a "home page" for the site and then making a tag-all request.

The tag-all process illustrated in Fig. 8 is recursive, meaning that the process involves the use of a procedure or computer routine that invokes itself The procedure or routine is processed to a step where self-invocation occurs until a condition for termination is met, at which time each instance of invocation completes processing in order from the last one invoked to the first one invoked.

Step 151 represents activities that are required to implement and initialize a recursive routine. For example, this may include allocating memory or manipulating a stack to save program variables from a previous invocation and initializing program variables for this particular instance of invocation. Step 152 determines whether the current document is already in a set. This set may the same set discussed above in connection with tagging documents or it may be different. The following discussion and the process illustrated in Fig. 8 assume the sets are different.

If the current document is already in the set, the process continues with step 159. Step 159 represents activities that are required to terminate a recursive routine such as, for example, deallocating memory or manipulating a stack to restore program variables from a previous invocation. If the current document is not yet in the set, step 153 adds the current document to the set and step 154 parses the contents of the current document to extract any references or links to other documents. If step 155 determines that the current document has no links to other documents, the process continues with step 159. If the current document does have links to other documents, the process continues with step 156, which "gets" the first document referenced by the current document. The newly obtained document becomes the new current document for the recursive invocation of the process in step 157.

When the recursive invocation returns, the newly obtained document is no longer the current document. Instead, the document that was deemed to be the current document in step 151 is reinstated as the current document. Processing continues in step 158, which determines if all documents referenced by the current document have been obtained. Step 158 reiterates steps 156 and 157 until all of the documents referenced by the current document have been processed. The process then continues with step 159.

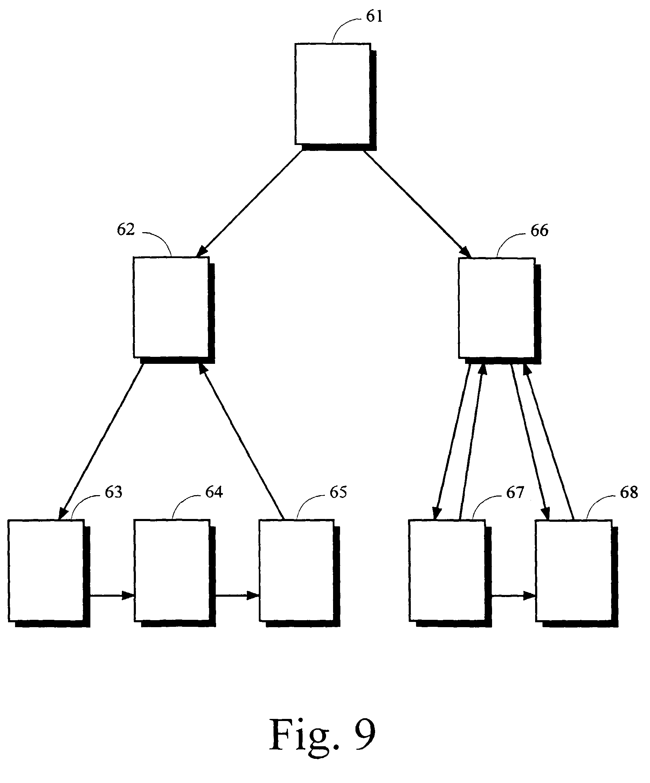

The test in step 152 improves processing efficiency by detecting documents that are referenced by more than one other document and it prevents endless-loop processing by detecting documents that reference one another in a circular manner. Examples of both situations are illustrated in Fig. 9. Document 61 represents a main or "home" page for a collection of documents that has direct links to documents 62 and 66 and has indirect links to the remaining documents. Documents 62 and 66 are each referenced by more than one other document; that is, document 62 is referenced by documents 61, 65 and 67, and document 66 is referenced by documents 61, 67 and 68. Documents 62 and 66 are each included in sets of circular links; that is, links in documents 62 to 65 form a loop, links in documents 66 and 67 form a loop, links in documents 66 and 68 form another loop, and links in documents 66 to 68 form yet another loop.

The existence of multiple references and loops are detected in step 152. For example, referring to the arrangement of documents in Fig. 9, the tag-all process of Fig. 8 begins with document 61. In a first level of recursion, step 152 determines that document 61 is not in the set and step 153 adds document 61 to the set. Steps 156 and 157 then traverse the link to document 62. In a second level of recursion, step 152 determines that document 62 is not in the set and step 153 adds document 62 to the set. Steps 156 and 157 then traverse the link to document 63. At subsequent levels of recursion, steps 152 and 153 add documents 64 and 65 to the set and traverse links to the next document. When the process traverses the link from document 65 to document 62, step 152 determines that document 62 is already in the set and immediately goes to step 159 to terminate processing at that level of recursion and resume processing in step 158 for document 65. Step 158 for document 65 determines that all links have been traversed and proceeds to step 159. Each level of recursion terminates in a similar manner until reaching the first level of recursion for document 61. At that level, step 158 determines that another link exists to document 66 and the process continues with step 156 by adding document 66 to the set and making a recursive call in step 157. The process continues in a similar manner until all links have been traversed and each document has been added to the set.

If the set referred to in this discussion of the tag-all process is the same as the set of tagged documents described above, the process should be modified slightly by having the "yes" branch" of step 152 lead to step 154. This change should be made even though it degrades processing efficiency because it is possible a document could have been added to the set by a simple tag request and, therefore, the links in that document have not yet been traversed.

The tag-all process just described may be modified to limit the number of levels of recursion. This may be accomplished, for example, in step 151 by incrementing a variable representing the current level of recursion, comparing that variable with a specified limit and either proceeding directly to step 159 if the limit is reached or continuing with step 152 if the limit is not reached. As another example, this may be accomplished in step 157 by comparing a variable representing the current level of recursion with the specified limit and either skipping the recursive call if the limit is reached or incrementing the variable and making the recursive if the limit is not reached. Other implementations are possible. No particular implementation is important.

If desired, a second type of tag-all request can be provided in addition to or instead of the first type of tag-all request described above. According to the second type of tag-all request, only directly-referenced documents are tagged. This is equivalent to setting the recursion limit to one level. Referring to Fig. 9, for example, this second type of tag-all request for document 61 would cause only documents 61, 62 and 66 to be added to the set. The second type of get-all request may be implemented by a process similar to that shown in Fig. 8 by replacing step 156 and recursive step 157 with steps that add a referred-to document to the set if it is not already in the set.

### Online Book

An "online book" is a collection of documents or Web pages that are obtained from a network such as the Web. It is significant that these documents may be changed at any time. As a result, a copy of these documents may become obsolete or superceded at any time after a user obtains the copy. One aspect of the present invention provides a process for printing the online book such a that each document or Web page reflects the latest version that is available from the network. One way in which this process may be carried out is illustrated in Fig. 10.

Step 201 fetches a "book set" of references that define the contents of the online book. The book set may be stored on storage device 28 or may be accessible as a document itself from network 40, for example. Step 202 obtains the first reference from the book set and submits a "get" request to network 40 to obtain the current version of the document that corresponds to the reference. Step 203 determines whether the document obtained from the network is already available in local storage and, if not, step 204 adds the document to local storage. If the document obtained from the network is available in local storage or, to be more precise, has a counterpart in local storage that may or may not be identical, step 205 determines if the counterpart in local storage has been superceded by the document just obtained from the network. If the counterpart has been superceded, step 206 replaces the counterpart with the document just obtained from the network Step 207 determines whether all references in the book set have been processed. If not, the process continues with step 202, which obtains the next reference in the book set and submits a "get" request to network 40 to obtain the current version for the document that corresponds to this next reference. This process reiterates until step 207 determines that all references in the book set have been processed, at which time step 208 generates image information for each document in the online-book set.

An online book set may also be organized into one or more subsets as described above for tagged documents. For such an embodiment, the online-book print process also may be carried out for one or more subsets of the book set. Such a process can operate in the manner described above except that references to "book set" should be understood to refer to the appropriate subsets.

The process used to provide the on-line book feature may be varied in a number of ways. For example, each document could be rendered and printed one-by-one just prior to step 207. As another example, the rendition of each document could be controlled by one or more user preferences as described above. As yet another example, the book set could include references that represent either or both types of "tag-all" requests discussed above. The use of tag-all references could reduce the amount of storage required to store the book set and it would allow the contents of the on-line book to vary according to changes in the way documents are linked together.

The processes illustrated in the various figures omit various steps that may be important in practical embodiments but are not important for understanding concepts of the present invention. For example, the process shown in Fig. 10 does not include steps to handle error conditions such syntactical errors in the book set or situations where one or more documents referenced in the book set are not available. It should be apparent that the illustrated processes are not the only way the present invention may be carried out.

## Claims

1. A method for processing documents comprising:
obtaining a plurality documents from a network,
receiving tag requests and, in response thereto, storing a plurality of tag references that constitute a set of references, each tag reference identifying a respective one of said plurality of documents, and
receiving a print request and, in response thereto, generating image information representing a rendition of each documents that has a tag reference in the set.

2. A method according to claim 1 that further comprises receiving one or more edit requests and, in response thereto, displaying a representation of the tag references in the set, removing a tag reference from the set, or reordering the tag references in the set.

3. A method according to claim 1 wherein one or more of said plurality of documents is stored in cache memory and the image information is generated from at least one document that has been saved in cache memory.

4. A method according to claim 1 that comprises receiving a tag-all request and, in response thereto, ensuring the set includes tag references for all documents that are referenced by a selected document.

5. A method according to claim 1 wherein at least one of the plurality of document has content that conforms to a Standard Generalized Markup Language.

6. A method according to claim 1 that further comprises displaying a representation of contents for one or more documents having a respective tag reference in the set.

7. A method according to claim 1 that further comprises obtaining one or more user preferences and generating the image information according to the user preferences.

8. A method according to claim 1 that further comprises:
receiving a start request prior to obtaining the plurality of document and, in response thereto, interacting with a network server to initiate facilities to service any subsequent tag requests and to service a stop request, and
receiving the stop request and, in response thereto, interacting with a network server to initiate facilities to service the print request.

9. A method for processing documents comprising:
obtaining a set of references, each reference identifying a respective document,
recording in local storage a document obtained from a network that is represented by a reference in the set and is either not yet recorded in local storage or is recorded in local storage in a form that is superceded by the document obtained from the network, and
generating image information representing a rendition of the documents that are represented by a reference in the set.

10. A method according to claim 9 that further comprises receiving one or more edit requests and, in response thereto, displaying a representation of the references in the set, removing a reference from the set, or reordering the references in the set.

11. A method according to claim 9 wherein one or more of said plurality of documents is stored in cache memory and the image information is generated from at least one document that has been saved in cache memory.

12. A method according to claim 9 where the set of references includes at least one extended reference that represents all other documents that are referenced by a selected document corresponding to the extended reference.

13. A method according to claim 9 wherein the set includes one or more tag-all references that each refer to a specified document and all documents that are referenced by the specified document.

14. A method according to claim 9 that further comprises obtaining one or more user preferences and generating the image information according to the user preferences.

15. A medium readable by a machine embodying a program of instructions for execution by said machine to perform a method for processing documents, said method comprises:
obtaining a plurality documents from a network,
receiving tag requests and, in response thereto, storing a plurality of tag references that constitute a set of references, each tag reference identifying a respective one of said plurality of documents, and
receiving a print request and, in response thereto, generating image information representing a rendition of each documents that has a tag reference in the set.

16. A medium according to claim 15 wherein the method further comprises receiving one or more edit requests and, in response thereto, displaying a representation of the tag references in the set, removing a tag reference from the set, or reordering the tag references in the set.

17. A medium according to claim 15 wherein one or more of said plurality of documents is stored in cache memory and the image information is generated from at least one document that has been saved in cache memory.

18. A medium according to claim 15 wherein the method comprises receiving a tag-all request and, in response thereto, ensuring the set includes tag references for all documents that are referenced by a selected document.

19. A medium according to claim 15 wherein at least one of the plurality of document has content that conforms to a Standard Generalized Markup Language.

20. A medium according to claim 15 wherein the method further comprises displaying a representation of contents for one or more documents having a respective tag reference in the set.

21. A medium according to claim 15 wherein the method further comprises obtaining one or more user preferences and generating the image information according to the user preferences.

22. A medium according to claim 15 wherein the method further comprises:
receiving a start request prior to obtaining the plurality of document and, in response thereto, interacting with a network server to initiate facilities to service any subsequent tag requests and to service a stop request and
receiving the stop request and, in response thereto, interacting with a network server to initiate facilities to service the print request.

23. A medium readable by a machine embodying a program of instructions for execution by said machine to perform a method for processing documents, said method comprises:
obtaining a set of references, each reference identifying a respective document,
recording in local storage a document obtained from a network that is represented by a reference in the set and is either not yet recorded in local storage or is recorded in local storage in a form that is superceded by the document obtained from the network, and
generating image information representing a rendition of the documents that are represented by a reference in the set.

24. A medium according to claim 23 wherein the method further comprises receiving one or more edit requests and, in response thereto, displaying a representation of the references in the set, removing a reference from the set, or reordering the references in the set.

25. A medium according to claim 23 wherein one or more of said plurality of documents is stored in cache memory and the image information is generated from at least one document that has been saved in cache memory.

26. A medium according to claim 23 where the set of references includes at least one extended reference that represents all other documents that are referenced by a selected document corresponding to the extended reference.

27. A medium according to claim 23 wherein the set includes one or more tag-all references that each refer to a specified document and all documents that are referenced by the specified document.

28. A medium according to claim 23 wherein the method further comprises obtaining one or more user preferences and generating the image information according to the user preferences.

29. An apparatus for processing documents comprising:
means for obtaining a plurality documents from a network,
means for receiving tag requests and, in response thereto, storing a plurality of tag references that constitute a set of references, each tag reference identifying a respective one of said plurality of documents, and
means for receiving a print request and, in response thereto, generating image information representing a rendition of each documents that has a tag reference in the set.

30. An apparatus according to claim 29 that further comprises means for receiving one or more edit requests and, in response thereto, displaying a representation of the tag references in the set, removing a tag reference from the set, or reordering the tag references in the set.

31. An apparatus according to claim 29 wherein one or more of said plurality of documents is stored in cache memory and the image information is generated from at least one document that has been saved in cache memory.

32. An apparatus according to claim 29 that comprises means for receiving a tag-all request and, in response thereto, ensuring the set includes tag references for all documents that are referenced by a selected document.

33. An apparatus according to claim 29 wherein at least one of the plurality of document has content that conforms to a Standard Generalized Markup Language.

34. An apparatus according to claim 29 that farther comprises means for displaying a representation of contents for one or more documents having a respective tag reference in the set.

35. An apparatus according to claim 29 that further comprises means for obtaining one or more user preferences and generating the image information according to the user preferences.

36. An apparatus according to claim 29 that further comprises:
means for receiving a start request prior to obtaining the plurality of document and, in response thereto, interacting with a network server to initiate facilities to service any subsequent tag requests and to service a stop request, and
means for receiving the stop request and, in response thereto, interacting with a network server to initiate facilities to service the print request.

37. An apparatus for processing documents comprising:
means for obtaining a set of references, each reference identifying a respective document,
means for recording in local storage a document obtained from a network that is represented by a reference in the set and is either not yet recorded in local storage or is recorded in local storage in a form that is superceded by the document obtained from the network, and
means for generating image information representing a rendition of the documents that are represented by a reference in the set.

38. An apparatus according to claim 37 that further comprises means for receiving one or more edit requests and, in response thereto, displaying a representation of the references in the set, removing a reference from the set, or reordering the references in the set.

39. An apparatus according to claim 37 wherein one or more of said plurality of documents is stored in cache memory and the image information is generated from at least one document that has been saved in cache memory.

40. An apparatus according to claim 37 where the set of references includes at least one extended reference that represents all other documents that are referenced by a selected document corresponding to the extended reference.

41. An apparatus according to claim 37 wherein the set includes one or more tag-all references that each refer to a specified document and all documents that are referenced by the specified document.

42. An apparatus according to claim 37 that further comprises means for obtaining one or more user preferences and generating the image information according to the user preferences.
